# EUROPEAN PATENT APPLICATION

(11) **EP 2 105 346 A2**
(43) Date of publication of application: **30.09.2009**
(21) Application number: 09154906.3
(22) Date of filing: 11.03.2009
(51) Int. Cl.: B60N 2/30

(54) **Seat apparatus for vehicle**

(30) Priority: 28.03.2008 JP 2008085506
(71) Applicant: AISIN SEIKI KABUSHIKI KAISHA, Kariya-shi, Aichi-ken 448-8650 (JP)
(72) Inventor: Mori, Masatoshi, Kariya-shi Aichi 448-8650 (JP); Miyake, Kouji, Kariya-shi Aichi 448-8605 (JP)
(74) Representative: TBK-Patent

(57) **Abstract**

A seat for a vehicle includes: a seat cushion frame (23), adapted to be mounted to a vehicle floor (20) side to rotate around a front end portion (23a) relative to a vehicle floor (20) and selectively operated to be in a raised state or in a used state relative to the vehicle floor (20); a seat back frame (24), adapted to be coupled at the vehicle floor (20) side to rotate relative to the vehicle floor (20) and operated to be in a stored state; a locking mechanism (43), provided between the seat cushion frame (23) being in a used state and the vehicle floor (20) and operated to lock the seat cushion frame (23); and an operating lever (38), rotatably provided at one side of the seat cushion frame (23) and made from a rigid body unlocking the locking mechanism (43) and rotating the seat cushion frame (23) in a direction in which the seat cushion frame (23) is raised in a single operation.

## Description

### FIELD OF THE INVENTION

The present invention relates to a seat apparatus for a vehicle having a double-folding mechanism.

### BACKGROUND

A seat apparatus for a vehicle, such as an automobile, having a double-folding mechanism is disclosed in JP2000-229527A (which will be hereinbelow referred to as reference 1). In the double-folding mechanism, in order to expand a loading space of a loading area when a rear seat is not used, the rear seat is inclined toward a front seat side so that a rear space can be used. According to the seat apparatus for the vehicle disclosed in reference 1, a seat back is inclined in a front direction of the vehicle so as to be stored in a space generated by raising a seat cushion in the front direction of the vehicle.

A seat for a vehicle having a double-folding mechanism is disclosed in JP11-105604A (which will be hereinbelow referred to as reference 2). The seat for the vehicle according to reference 2 includes a locking means and a band. The locking means includes: a locking body, normally fixing the seat cushion at a floor panel; a striker; and a coil spring. The band is provided at a lower surface of a rear portion of the seat cushion and releases the locking means. According to reference 2, the band, which is provided at the lower surface of the rear portion of the seat cushion, needs to be found by hand and pulled in order to raise the seat cushion. Consequently, the locking body of the locking means is rotated against a biasing force of the coil spring. Accordingly, the locking body is released from the striker and thereby unlocking the seat cushion. Subsequently, the seat cushion is raised by manually raising the back portion of the seat cushion while pulling the band.

According to reference 2, in order to raise the seat cushion, the band, which is hidden at the lower surface of the rear portion of the seat cushion, needs to be found by hand and then needs to be pulled in order to release the lock of the locking means. Further, it is difficult to raise the seat cushion only by pulling the band in a front side direction of the vehicle. Therefore, the rear portion of the seat cushion needs to be manually raised in order to raise the seat cushion. Thus, an operation for raising the seat cushion is difficult.

A need thus exits for a seat apparatus for a vehicle, in which unlocking of a locking mechanism for locking a seat cushion and raising of the seat cushion are easily operated in a single movement.

### SUMMARY OF THE INVENTION

According to an aspect of the present invention, a seat for a vehicle includes: a seat cushion frame adapted to be mounted to a vehicle floor side to rotate around a front end portion relative to a vehicle floor and selectively operated to be in a raised state or in a used state relative to the vehicle floor; a seat back frame adapted to be coupled at the vehicle floor side to rotate relative to the vehicle floor and operated to be in a stored state at a rear of the raised seat cushion frame by being inclined forward; a locking mechanism provided between the seat cushion frame being in a used state and the vehicle floor and operated to lock a rotational movement of the seat cushion frame; and an operating lever rotatably provided at one side of the seat cushion frame and made from a rigid body unlocking the locking mechanism and rotating the seat cushion frame in a direction in which the seat cushion frame is raised in a single operation.

Accordingly, the seat apparatus includes: the locking mechanism, locking the rotation of the seat cushion frame; and the operating lever, rotatably provided at the side surface of the seat cushion frame and made from the rigid body releasing the locking mechanism and rotating the seat cushion frame in the direction in which the seat cushion frame is raised in a single operation. Therefore, by simply raising the operating lever in the direction in which the seat cushion frame is raised, unlocking of the locking mechanism and raising of the seat cushion frame are operated by a single touch. Because the operating lever is made from the rigid body, unlocking of the locking mechanism and subsequent raising of the seat cushion frame are operated by the operating lever easily and surely in a single operation

According to a further aspect of the invention, the operating lever is provide at the one side of the seat cushion frame corresponding to an ingress and egress opening of the vehicle.

Accordingly, the operating lever is provided at the side surface of the seat cushion frame corresponding to the rear ingress and egress opening. It is not necessary to refer to an operation manual to rotate the seat cushion frame because the seat cushion frame is rotated by simply operating the operating lever, which is provided to be conspicuous when the occupant gets into the vehicle.

According to a further aspect of the invention, the locking mechanism includes a locking lever supported by the seat cushion frame to rotate integrally with the operating lever, an engagement hook provided at the vehicle floor side and engaged with the locking lever to be engaged with and released from the locking lever, and a first biasing member biasing the locking lever in a direction in which the locking lever is engaged with the engagement hook.

Accordingly, the engagement portion of the locking lever is easily released from the engagement groove by rotating the locking lever against the first biasing member in a manner in which the locking lever is interlocked with the operating lever.

According to a further aspect of the invention, the seat cushion frame is biased by a second biasing member in a direction of a seating position. The seat cushion frame inclines the seat back frame in accordance with the raising of the seat cushion frame when the seat cushion frame is raised forward and the seat cushion frame contacts a headrest of the seat back frame, which is supported by the seat back frame, to prevent from being inclined in the direction of the seating position.

Accordingly, when a rear seat is stored, the seat cushion frame is held in the raised state. Further, the seat cushion frame is rotated automatically to the seating position by returning the seat back frame so as to be raised.

According to a further aspect of the invention, an unlocking lever for releasing the locking of a reclining mechanism is rotatably provided at the seat back frame and the rotational movement of the seat cushion frame is transmitted to the unlocking lever by a transmitting member through a play.

Accordingly, when the seat cushion frame is rotated at a first predetermined angle, locking mechanisms of the reclining mechanisms are operated to start inclining of the seat back frame. Consequently, the seat cushion frame and the seat back frame are stored in a manner in which the seat cushion frame and the seat back frame are surely interlocked.

### BRIEF DESCRIPTION OF THE DRAWINGS

The foregoing and additional features and characteristics of the present invention will become more apparent from the following detailed description considered with the reference to the accompanying drawings, wherein;

Fig. 1 is a side view illustrating a van having a seat apparatus for a vehicle;

Fig. 2 is a perspective view illustrating a frame of the seat apparatus for the vehicle according to an embodiment;

Fig. 3 is a side view illustrating the frame of the seat apparatus for the vehicle according to the embodiment;

Fig. 4 is a partially enlarged view of Fig. 3;

Fig. 5 is a view seen from direction 5 in Fig. 2;

Fig. 6 is a side view illustrating a seat cushion in a state where a lock of the seat cushion is released;

Fig. 7A illustrates an operational relationship between the seat cushion and a seat back in a state where a rear seat is used; and

Fig. 7B illustrates the operational relationship between the seat cushion and the seat back in a state where a rear seat is stored; and

Fig. 8 illustrates the operational relationship among the seat cushion, a seat back and a headrest according to a modified example.

### DETAILED DESCRIPTION

An embodiment of a seat apparatus for a vehicle (which will be hereinbelow referred to as a seat apparatus) having a doubles-folding mechanism will be described hereinbelow with reference to the attached drawings. Directions such as "front", "rear", "upward", "downward", "upper", "lower" and similar expressions correspond to an orientation of the seat apparatus according to the embodiment. The seat apparatus according to the embodiment is adapted at a rear seat of a van-type passenger vehicle or sports utility vehicle in which a loading area is provided at a rear portion of a vehicle interior.

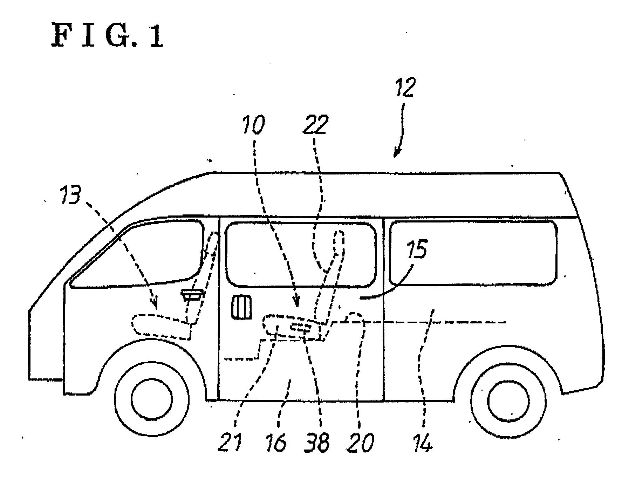

Fig. 1 illustrates an example of a van 12. A front seat 13, including a driver seat, is mounted on the van 12 at a front portion of a rear seat 10. A loading area 14 is mounted on the van 12 at a rear portion of the rear seat 10. An occupant may get on and off the rear seat 10 through a rear ingress and egress opening 16, which appears by opening a sliding door 15. The rear seat 10 is mounted on a vehicle floor 20 in a substantially horizontal state. The rear seat 10 includes: a seat cushion 21, on which the occupant is seated, and a seat back 22, which is held at a rear portion of the seat cushion 21 in an upright state and which receives the back of the occupant.

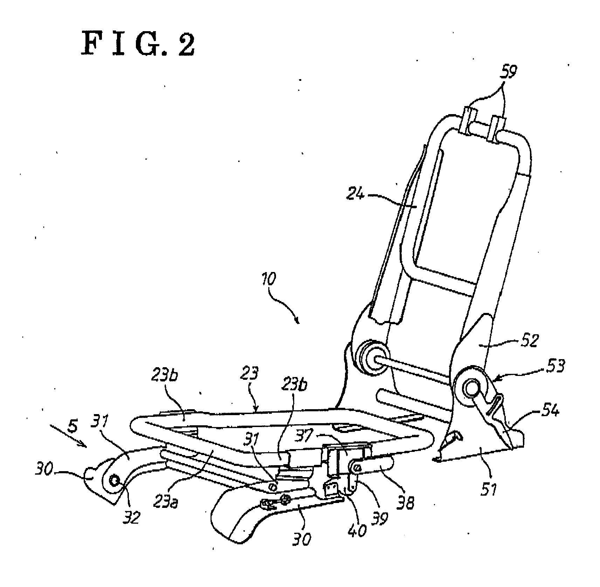

Figs. 2, 3 and 6 illustrates a frame of the rear seat 10 illustrated without the seat cushion 21 and the seat back 22. The seat cushion 21 is attached to a seat cushion frame 23, The seat back 22 is attached to a seat back frame 24. As illustrated in Fig. 2, each of the seat cushion frame 23 and the seat back frame 24 is made from a pipe material that is bent in a substantially rectangular shape.

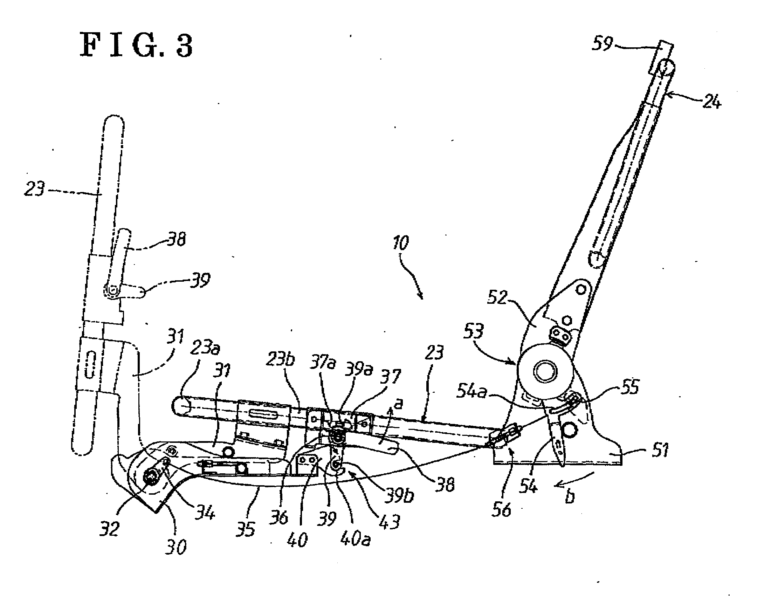

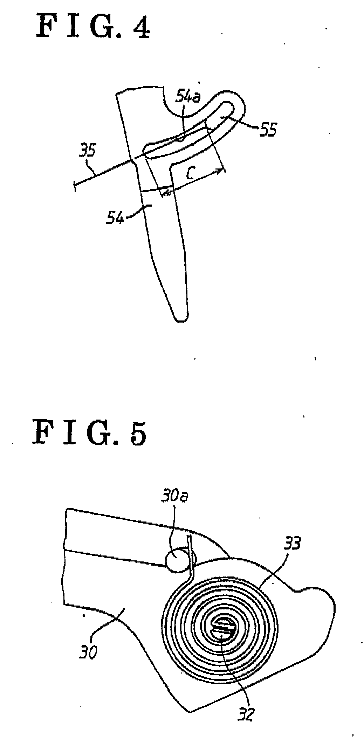

A pair of fixed frames 30 is fixed at the vehicle floor 20 (see Fig. 1). A pair of swinging brackets 31 is respectively supported at the fixed frames 30 by a pair of hinge pins 32 so as to swing. The hinge pins 32 are arranged to rotate around an axis being in parallel to a width direction of the vehicle. The seat cushion frame 23 is integrally attached to the swinging brackets 31. In a state where front end portions 23a of the seat cushion frame 23 are positioned in the vicinity of the corresponding hinge pins 32, side end portions 23b of the seat cushion frame 23 are attached to the corresponding swinging bracket 31. As illustrated in Fig. 5, a helical torque spring 33 (a second biasing member) is provided around one of the hinge pins 32. One end of the torque spring 33 is engaged with the hinge pin 32, The other end thereof is engaged with an engagement pin 30a, which is fixed at the fixed frame 30. The torque spring 33 provides the hinge pin 32 with rotational torque in a counter-clockwise direction in Fig. 5 (in a clockwise direction in Fig. 3). Therefore, the torque spring 33 consistently biases the seat cushion frame 23 in a direction of a seating position.

An operation link member 34 is attached to one end of the other one of the hinge pins 32. One end of a wire 35 (a transmitting means) is connected to the operation link member 34. The other end thereof is connected to a reclining mechanism 53 of the seat back 22. The reclining mechanism 22 is operated accompanying rotation of the hinge pin 32, that is rotation of the seat cushion frame 23.

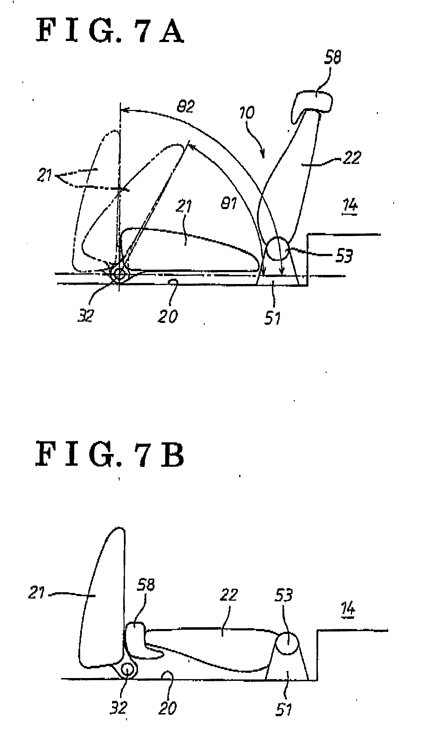

As illustrated by a solid line in Fig. 7A, the seat cushion 21, attached to the seat cushion frame 23, is normally held at the seating position being horizontal to the vehicle floor 20, A rotating shaft 36 is provided at a substantially intermediate portion of the side end portion 23b of the seat cushion frame 23 in the front - rear direction of the vehicle via a supporting bracket 37, so as to rotate around an axis being in parallel to the axis of the hinge pins 32. An operating lever 38 and a locking lever 39 are fixed at the rotating shaft 36 so as to form approximately a right angle. The operating lever 38 is made from a rigid body. The operating lever 38 is provided at a position of a side of the seat cushion frame 23 corresponding to the rear ingress and egress opening 16, in other words, a conspicuous position seen from the ingress and egress opening 16. The operating lever 38 extends in a horizontal direction toward the rear of the vehicle and is raised (in a direction indicated by an arrow a in Fig. 3) at the rear ingress and egress opening 16.

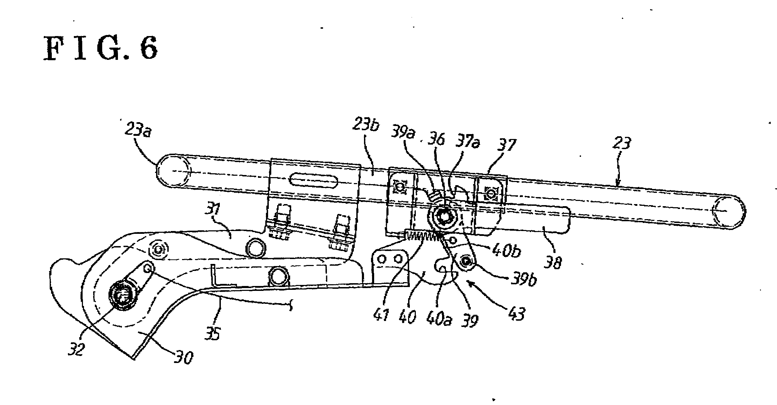

The locking lever 39 extends downward. As illustrated in Fig. 6, the locking lever 39 includes a stopper 39a at an upper end thereof. The stopper 39a selectively engages with both end portions of a recessed portion 37a, which is formed at the supporting bracket 37, so as to be rotated at the predetermined angle relative to the supporting bracket 37. An engagement portion 39b is provided at a lower end of the locking lever 39. An engagement hook 40 that includes an engagement groove 40a is integrally attached to the fixed frame 30. The engagement groove 40a is engageable with and releasable from the engagement portion 39b of the locking lever 39. The engagement groove 40a of the engagement hook 40 opens toward the rear of the vehicle. By operating the operation lever 39 upward, the engagement portion 39b of the locking lever 39 is released from the engagement groove 40a. A cam surface 40b (see Fig. 6) is provided at an upper portion of the engagement groove 40a of the engagement hook 40. When the engagement portion 39b of the locking lever 39 is engaged with the engagement groove 40a, the engagement portion 39b contacts and then slides on the cam surface 40b.

A tension spring 41 (a first biasing member) is positioned between the locking lever 39 and the supporting bracket 37. The locking lever 39 is biased by a biasing force of the tension spring 41 in a direction in which the engagement portion 39b thereof is engaged with the engagement groove 40a of the engagement hook 40. Therefore, as illustrated in Fig. 3, in a normal state, the engagement portion 39b of the locking lever 39 is engaged with the engagement groove 40a of the engagement hook 40 and the seat cushion frame 23 is held at the seating position being substantially horizontal.

A locking mechanism 43 for locking rotation of the seat cushion frame 23 (the seat cushion 21) being in the used state includes: the locking lever 39, having the engagement portion 39b; the engagement hook 40, having the engagement groove 40a; the tension spring 41; and the like.

A pair of lower brackets 51 is mounted on the vehicle floor 20 at the rear of the seat cushion frame 23. A pair of upper brackets 52, which is integrally attached to the seat back frame 24, is respectively rotatably supported at the lower brackets 51 via the reclining mechanisms 53. The reclining mechanisms 53 adjust an inclination angle of the seat back 22 and hold the seat back 22 at a predetermined position. Locking mechanisms, which lock the seat back frame 24 at a predetermined angular position, are respectively accommodated in the reclining mechanisms 53. One of the reclining mechanisms 53 includes an unlocking lever 54 at a side end portion of the lower bracket 51. When the unlocking lever 54 is pulled in a front direction (in a direction indicated by an arrow b in Fig. 3) by the occupant, locks of the locking mechanisms are released and the seat back frame 24 is inclined forward by a biasing force of a spring.

As illustrated in detail in Fig. 4, an elongated hole 54a is formed at the unlocking lever 54 of the reclining mechanism 53. The elongated hole 54a is formed in a circular shape centering a rotational axis ofthe seat back frame 24. A sliding member 55 is engaged with the circular-shaped elongated hole 54a so as to slide along the circular-shaped elongated hole 54a. One end of the wire 3 5 is connected to the operation link member 34. The other end thereof is guided by a wire guide 56, which is provided at the lower bracket 51, and is connected to the sliding member 55. Therefore, when the operation link member 34 is rotated, the sliding member 55 is pulled via the wire 35 and thereby slides in the circular-shaped elongated hole 54a. In a state where the seat cushion 21 is positioned at the seating position, a play C of a predetermined amount is provided between the sliding member 55 and an end portion of the circular-shaped elongated hole 54a. When the sliding member 55 is pulled via the wire 35 by rotation of the link member 34, the sliding member 55 slides in the circular-shaped elongated hole 54a. Because of a function of the play C, the sliding member 55 slides in the circular-shaped elongated hole 54a for the predetermined amount before the sliding member 55 is engaged with the end portion of the circular-shaped elongated hole 54a so as to rotate the unlocking lever 54 in a direction in which the locks of the locking mechanisms are released.

As schematically illustrated in Figs. 7A and 7B, when the seat cushion 21 is raised at a first predetermined angle θ1, the sliding member 55, pulled by the wire 35, is engaged with the end portion of the circular-shaped elongated hole 54a and thereby rotates the unlocking lever 54 so as to release the locks of the locking mechanisms. Consequently, a headrest 58 held by the seat back 22, which is inclined forward by the biasing force of the spring when the locks of the locking mechanisms is released, contacts a rear surface of the seat cushion 21. Subsequently, as the seat cushion 21 is raised, the seat back 22 is inclined forward. A resin panel, or the like, may be attached at the rear surface of the seat cushion 21 so that the headrest 58 smoothly slides on the rear surface of the seat cushion 21 when the seat cushion 21 is raised.

As illustrated in Figs. 2 and 3, stays 59 support the headrest 58 relative to the seat back frame 24.

An operation of the seat apparatus according to the embodiment will be described hereinbelow. When the rear seat 10 is used, the engagement portion 39b of the locking lever 39 is engaged with the engagement groove 49a of the engagement hook 40 that is provided at the fixed frame 30. Accordingly, as illustrated in Figs. 3 and 7A, the seat cushion frame 23 (the seat cushion 21) is held at the substantially horizontal seating position so as to be in a used state. Further, the seat back frame 24 (the seat back 22) is held at the predetermined angular position by the reclining mechanisms 53.

In order to expand a space ofthe loading area 14 in such a state, the operating lever 38, which is made from the rigid body and which is provided at the side end portion 23b of the seat cushion frame 23 so as to correspond to the rear ingress and egress opening 16, is operated upward (in the direction indicated by the arrow a in Fig. 3) against the biasing force of the tension spring 41. The locking lever 39 is rotated integrally with the operating lever 38 and thereby, as illustrated in Fig. 6, the engagement portion 39b of the locking lever 3 9 is released from the engagement groove 40a of the engagement hook 40. Accordingly, the seat cushion frame 23 can be rotated. Subsequently, the stopper portion 39a of the locking lever 39 is engaged with the end portion ofthe recessed portion 37a of the supporting bracket 37. Therefore, in accordance with a continuous operation of the operating lever 38 in an upper direction, the seat cushion frame 23 is rotated around the hinge pins 32 and raised against the biasing force of the torque spring 33, Thus, by a single operation of the operating lever 38 in the upper direction, unlocking of the locking mechanism 43 and raising of the seat cushion frame 23 are operated in an interlocking manner.

Because the operating lever 38 is made from the rigid body, by operating the operating lever 38, unlocking of the locking mechanism 43 and subsequent raising the seat cushion frame 23 are easily and surely operated in a single operation.

In accordance with a rotation of the seat cushion frame 23, the operation link member 34 is rotated together with the hinge pin 32, and thereby the wire 35 is pulled. Consequently, the sliding member 55, connected to the wire 35, slides in the circular-shaped elongated hole 54a of the unlocking lever 54 of the reclining mechanism 53 for a distance of the play C. When the operation link member 34 is rotated at a predetermined angle, the sliding member 55 is engaged with the end portion of the circular-shaped elongated hole 54a. Consequently, a movement of the sliding member 55 is transmitted to the unlocking lever 54, so that the unlocking lever 54 is rotatably operated in a direction in which the locks of the lock mechanisms of the reclining mechanisms 53 are released (in a direction indicated by an arrow b in Fig. 3).

As illustrated in Fig. 7A, when the seat cushion 21 is raised at the first predetermined angle θ1, the unlocking lever 54 is rotatably operated to release the lock of the lock mechanism. Consequently, the seat back 22 is inclined forward by the biasing force of the spring, so that the headrest 58 contacts the rear surface of the seat back 22. Subsequently, accompanying the raising of the seat cushion 21, the seat back 22 is inclined in a manner where the headrest 58 slides on the rear surface of the seat cushion 21. As illustrated in Fig. 3 by the double dashed line and in Fig. 7B, when the seat cushion 21 is rotated at a second predetermined angle θ2, so that the seat cushion 21 and the seat cushion frame 23 are raised to be in a substantially upright state, the seat back 22 is inclined forward of the vehicle so as to be in a substantially stored state. In other words, the seat back 22 is stored in the substantially stored state in a space generated by raising of the seat cushion 21. A rear surface of the seat back 22 is moved so as to be flush with a floor of the loading area 14 and therefore, the space of the loading area 14 is expanded. As illustrated in Fig. 7B, the biasing force exerted on the seat cushion 21 by the torque spring 33 is received by the headrest 58 of the seat back 22 contacting the seat cushion 21. Therefore the seat cushion 21 maintains a raised state.

In order to return the rear seat 10 to a state where the rear seat 10 is used, an upper end portion of the seat back 22 is manually raised so that the seat back 22 is rotated in the rear direction of the vehicle against the biasing force of the spring. Thus, the seat back 22 is raised to a predetermined angular state. In accordance with raising of the seat back 22, the seat cushion 21 is rotated around the hinge pins 32 in a clockwise direction in Figs. 7A and 7B by the biasing force of the torque spring 33. When the seat cushion 21 is rotated at a predetermined angle, the engagement portion 39b of the locking lever 39 contacts and then slides the cum surface 40b of the engagement hook 40. When the seat cushion 21 is further rotated to be in a substantially horizontal state, the engagement portion 39b is engaged with the engagement groove 40a of the engagement hook 40 by the biasing force of the tension spring 41. Thus, the seat cushion 21 is locked and held at the seating position.

In a case where the headrest 58 of the rear seat 10 is structured so that a position thereof is adjusted relative to the seat back 22 in an upper - lower direction, the headrest 58 needs to be retracted to a position closest to the seat back 22 when the rear seat 10 is stored. Therefore, headrest locking mechanisms, which lock and hold the headrest 58 at a selected position, are provided. The headrest 58 may be configured so that the headrest 58 is retracted to the position closest to the seat back 22 by a biasing force of a spring in a case where locks of the headrest locking mechanisms are released.

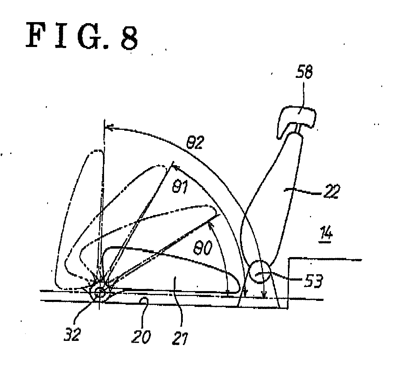

In order to release the locks of the headrest locking mechanisms along with raising of the seat cushion 21, a wire is connected to the operation link member 34 and the headrest locking mechanisms through an inside of the seat back 22. As illustrated in Fig. 8 as a modified example, the locks of the headrest locking mechanisms are released, for example when the seat cushion 21 is rotated at a third predetermined value θ0. The seat cushion 21 is raised at a third predetermined angle θ0 before the unlocking lever 54 of the reclining mechanism 53 is operated (before the seat cushion 21 is rotated at an angular θ1). The third predetermined angle θ0 is determined as follows: θ0≺θ1. Thus, the seat back 22 is inclined in a state where the headrest 58 is surely retracted.

According to the embodiment, the seat apparatus includes: the locking mechanism 43, locking the rotation of the seat cushion 21; and the operating lever 38, rotatably provided at a side surface of the seat cushion 21and made from the rigid body releasing the locking mechanism 43 and rotating the seat cushion 21 in the direction in which the seat cushion 21 is raised in a single operation. Therefore, by simply raising the operating lever 38 in the direction in which the seat cushion 21 is raised, unlocking of the locking mechanism 43 and raising of the seat cushion 21 are operated by a single touch. Because the operating lever 38 is made from the rigid body, unlocking of the locking mechanism 43 and subsequent raising of the seat cushion frame 23 are operated by the operating lever 38 easily and surely in a single operation.

According to the embodiment, the operating lever 38 is provided at the side surface of the seat cushion frame 23 corresponding to the rear ingress and egress opening 16. It is not necessary to refer to an operation manual to rotate the seat cushion 21 because the seat cushion 21 is rotated by simply operating the operating lever 38, which is provided to be conspicuous when the occupant gets into the vehicle.

According to the embodiment, the locking mechanism 43 includes the locking lever 39, the engagement hook 40 and the tension spring 41. The seat cushion 21 so as to rotate integrally with the operating lever 38 supports the locking lever 39. The engagement hook 40 is provided at the fixed frame 30 and includes the engagement groove 40a. The engagement groove 40a is engaged with and released from the engagement portion 39b of the locking lever 39. The tension spring 41 biases the locking lever 39 in a direction in which the engagement portion 39b is engaged with the engagement groove 40a. Therefore, the engagement portion 39b of the locking lever 39 is easily released from the engagement groove 40a by rotating the locking lever 39 against the tension spring 41 in a manner in which the locking lever 39 is interlocked with the operating lever 38.

According to the embodiment, the seat cushion 21 is biased in a direction of the seating position by the torque spring 33. When the seat cushion 21 is raised forward, the seat cushion 21 contacts the headrest 58 of the seat back 22, which is inclined in accordance with the raising of the seat cushion 21, so as to prevent from being inclined in the direction of the seating position. Therefore when the rear seat 10 is stored, the seat cushion 21 is held in the raised state. Further, the seat cushion 21 is rotated automatically to the seating position by returning the seat back 22 so as to be raised.

According to the embodiment, the unlocking lever 54 is rotatably provided at the seat back 22. The unlocking lever 54 releases the locks of the reclining mechanisms 53. The rotational movement of the seat cushion 21 is transmitted to the unlocking lever 54 by the wire 35 through the play C. Therefore, when the seat cushion 21 is rotated at the first predetermined angle θ1, the locking mechanisms of the reclining mechanism are operated to start inclining of the seat back 22. Consequently, the seat cushion 21 and the seat back 22 are stored in a manner in which the seat cushion 21 and the seat back 22 are surely interlocked.

According to the embodiment, the rotation of the seat cushion 21 is transmitted to the reclining mechanism 53 by the wire 35. However, a cable, a rope or the like may be used instead of the wire 35.
A seat for a vehicle includes: a seat cushion frame (23), adapted to be mounted to a vehicle floor (20) side to rotate around a front end portion (23a) relative to a vehicle floor (20) and selectively operated to be in a raised state or in a used state relative to the vehicle floor (20); a seat back frame (24), adapted to be coupled at the vehicle floor (20) side to rotate relative to the vehicle floor (20) and operated to be in a stored state; a locking mechanism (43), provided between the seat cushion frame (23) being in a used state and the vehicle floor (20) and operated to lock the seat cushion frame (23); and an operating lever (38), rotatably provided at one side of the seat cushion frame (23) and made from a rigid body unlocking the locking mechanism (43) and rotating the seat cushion frame (23) in a direction in which the seat cushion frame (23) is raised in a single operation.

## Claims

1. A seat for a vehicle comprising:
a seat cushion frame (23) adapted to be mounted to a vehicle floor (20) side to rotate around a front end portion (23a) relative to a vehicle floor (20) and selectively operated to be in a raised state or in a used state relative to the vehicle floor (20);
a seat back frame (24) adapted to be coupled at the vehicle floor (20) side to rotate relative to the vehicle floor (20) and operated to be in a stored state at a rear of the raised seat cushion frame (23) by being inclined forward;
a locking mechanism (43) provided between the seat cushion frame (23) being in a used state and the vehicle floor (20) and operated to lock a rotational movement of the seat cushion frame (23); and
an operating lever (38) rotatably provided at one side of the seat cushion frame (23) and made from a rigid body unlocking the locking mechanism (43) and rotating the seat cushion frame (23) in a direction in which the seat cushion frame (23) is raised in a single operation.

2. The seat for the vehicle according to claim 1, wherein
the operating lever (38) is provided at the one side of the seat cushion frame (23) corresponding to an ingress and egress opening (16) of the vehicle.

3. The seat for the vehicle according to either one of claims 1 and 2, wherein
the locking mechanism (43) includes a locking lever (39) supported by the seat cushion frame (23) to rotate integrally with the operating lever (38), an engagement hook (40) provided at the vehicle floor (20) side and engaged with the locking lever (39) to be engaged with and released from the locking lever (39), and a first biasing member (41) biasing the locking lever (39) in a direction in which the locking lever (39) is engaged with the engagement hook (40).

4. The seat for the vehicle according to any one of claims 1 - 3, wherein
the seat cushion frame (23) is biased by a second biasing member (33) in a direction of a seating position,
the seat cushion frame (23) inclines the seat back frame (24) in accordance with the raising of the seat cushion frame (23) when the seat cushion frame (23) is raised forward and
the seat cushion frame (23) contacts a headrest (58) of the seat back frame (24), which is supported by the seat back frame (24), to prevent from being inclined in the direction of the seating position.

5. The seat for the vehicle according to any one of claims 1 - 5, wherein
an unlocking lever (54) for releasing the locking of a reclining mechanism (53) is rotatably provided at the seat back frame (24) and the rotational movement of the seat cushion frame (23) is transmitted to the unlocking lever (54) by a transmitting member (3 5) through a play (C).
